# EUROPÄISCHE PATENTSCHRIFT

(11) **EP 3 532 359 B1**
(45) Veröffentlichungstag und Bekanntmachung des Hinweises auf die Patenterteilung: **08.07.2026**
(21) Anmeldenummer: 17808145.1
(22) Anmeldetag: 26.10.2017
(51) Int. Cl.: B62D 1/04, B62D 1/06

(54) **SENSOR-STRUKTUREN AM LENKRAD**
SENSOR STRUCTURES ON A STEERING WHEEL
STRUCTURES DE DÉTECTION SUR VOLANT DE DIRECTION

(30) Priorität: 26.10.2016 CH 14352016
(43) Veröffentlichungstag der Anmeldung: 04.09.2019
(73) Patentinhaber: Trachte, Ralf, 5000 Aarau (CH)
(72) Erfinder: Trachte, Ralf, 5000 Aarau (CH)
(74) Vertreter: Witte, Weller & Partner Patentanwälte mbB
(86) Internationale Anmeldenummer: PCT/IB2017/056644
(87) Internationale Veröffentlichungsnummer: WO 2018/078553

(56) Entgegenhaltungen:
- WO-A1-2015/055172
- WO-A1-2016/096815
- WO-A2-2005/096131
- DE-A1- 102009 058 138
- DE-A1- 102014 117 823

## Beschreibung

### Technisches Gebiet

Hintergrund dieser Erfindung ist folgender: Es besteht beim Lenkrad u.a. für Übergangsphasen zum autonomen Fahren Bedarf an komplexer Hands-On-Erkennung und an Möglichkeiten zu Touch-Eingaben, z.B. durch Gestik. Ein Problem bisheriger technischer Lösungen ist, dass auf der Lenkrad-Kranz-Oberfläche nur sehr einfache ja/nein-Hands-On-Erkennungen oder nur Erkennungen nach einfachen Sektoren oder nach einer Koordinate längs des Umfangs möglich sind. Gesucht sind aber Lösungen, die eine größere Abdeckung der Oberfläche mit feinauflösender Struktur leisten, so dass die Lenkrad-Kranz-Oberfläche als Eingabefläche dienen kann und die Sensoren z.B. auch eine greifende Hand bzw. die Finger einer das Lenkrad umfassenden Hand erkennen. Nach bisherigem Stand gibt es keine geeigneten verformbaren Sensoren und es bestehen Konflikte mit der Integration der notwendigen Fülle von Zuleitungen.

Das Dokument DE 10 2009 058138 A1 (VOLKSWAGEN AG, 16. Juni 2011 ) beschreibt zwei auf dem Lenkrad-Kranz ausgebreitete Gewebeschichten, die durch zwei Elektroden mit einer elektronischen Steuereinheit verbunden sind und zur Hands-Off-Erkennung bzw. Annäherungsmessung dienen.

Der Stand der Technik besteht in Hands-Off-Erkennungen bzw. Annäherungsmessungen, die aber NICHT in der Lage sind, die genaue Position einer Annäherung oder Berührung auf der Oberfläche eines Lenkrad-Kranzes zu bestimmen und insbesondere NICHT in der Lage sind, dabei gleichzeitig einzelne Handflächen oder einzelne Finger zu unterscheiden.

Probleme nach bisherigem Stand sind auch die Herstellbarkeit und dauerhafte Festigkeit im Betrieb. Das Lenkrad als geschlossener Ring stellt besondere Anforderungen und ist speziellen Belastungen ausgesetzt. Eine flächendeckende und feine Auflösung der Sensoren ist bisher nicht möglich. Probleme bei der Integration von Sensoren im Lenkradkranz sind Material-Wahl, Herstellbarkeit und Verformbarkeit. Hier werden innovative Möglichkeiten genannt zur Realisierung der Sensor-, Abschirmungs- und Zuleitungs-Strukturen.

### Kurze Darstellung der Erfindung

Wichtigste Innovation ist hier, den Lenkrad-Kranz weitestgehend mit einer Vielzahl von Sensoren oder einer Sensor-Gitter-Struktur zu umhüllen und die Zuleitungen durch eine Fuge in dieser Sensor-Oberfläche nach innen zu führen. Die Umhüllung kann insbesondere auf einer Linie längs der Kranz-Oberfläche unterbrochen werden, um dort eine Vielzahl von Zuleitungen nach innen in Richtung des Lenkrad-Kranz-Inneren zu führen. Also auch eine sehr hohe Zahl von Gitter-Leitungen kann dort nach innen geführt werden, um dann z.B. in einer eigenen Ebene längs des Lenkrad-Kranzes weitergeführt zu werden. Die Erfindung wird in den unabhängigen Ansprüchen 1 und 13 definiert.

Die Besonderheit hier ist, dass die Oberfläche des Lenkrad-Kranz-Ringkörpers weitestgehend mit einer fein-auflösenden Sensor-Struktur überzogen werden kann, so dass für quasi alle Punkte auf dem Lenkrad-Kranz feine Verschiebungen von Fingern in beliebige Richtungen gemessen werden können und zudem die hohe Zahl von Zuleitungen in der Konstruktion untergebracht wird. Die Installation insbesondere sich in kleiner Distanz kreuzender X-Linien und Y-Linien erlaubt eine Messung einzelner Finger in ihrer genauen Position und darüber hinaus auch die Messung komplexer Berührungsflächen, also ein Real-Multi-Touch, um Varianten des Berührens und Greifens der Hände erkennen zu können. Eine Multi-Channel-Technologie auf dem Lenkrad-Kranz ermöglicht echte Multi-Point-Multi-Touch-Messungen, so dass im Idealfall Finger- und Hand-Kontaktflächen gemessen werden. - Die hiervorgeschlagenen Varianten lösen Probleme, die durch die besondere Form des Torus-förmigen Lenkrad-Kranzes auftreten: Große Sensorlängen und Leitungslängen insbesondere längs des Kranzes, die durch einen mehrschichtigen Aufbau mit untereinander - z.B. durch Faltung - verknüpften Ebenen integriert werden, gegebenenfalls mit einer Leitungslängen-Kompensation durch besondere Kurvenverläufe ausgestattet werden und die durch die Umhüllung des Lenkrad-Kranzes notwendigen komplexen - schließlich insbesondere in Torus-Form gebrachten - dreidimensionalen Verformungen und robuste, produzierbare Integration des Sensors in das Lenkrad.

Generell: Eine Sensor-Matrix-Struktur wird also in die Form eines rohrförmigen Rings oder rohrförmigen Ring-Elements gebracht. Zuleitungen der Sensor-Ebenen werden durch Fugen nach innen in Richtung des Lenkrad-Kranz-Inneren unter bzw. in eine Abschirmung geführt.

Die offenbarten Lösungen können insbesondere den Lenkradkranz weitgehend umhüllen. Es können auch Teilbereiche des Lenkrads oder eines ähnlichen Eingabegerätes mit diesen Sensoren ausgestattet sein.

### Kurze Aufzählung der Zeichnungen

Fig. 1 zeigt eine beispielhafte Ausführungsform eines Sensors am Lenkrad-Kranz bzw. Lenkrad-Element bestehend aus Sensor-Matrix, Zuleitungen und Abschirmungen, dargestellt im Querschnitt und aufgeschnitten und radial auseinander gezogen als Explosionszeichnung.
Fig. 2 zeigt dieselbe Ausführungsform wie Fig. 1 in etwas anderer Perspektive mit Vergrößerung.
Fig. 3 zeigt eine beispielhafte Ausführungsform der abgewickelten Zuleitungs-Ebene mit einer Leitungslängen-Kompensation durch besondere Kurvenverläufe.
Fig. 4 zeigt eine Explosionszeichnung eines Ebenen-Aufbaus eines Sensors in der Variante mit Matrix-Flächen-Erweiterungen im noch nicht vollständig verformten Zustand.
Fig. 5 zeigt einen beispielhaften Lenkrad-Kranz im Querschnitt mit schichtweise freigelegten Ebenen der Sensor-Matrix mit Flächen-Erweiterungen, Zuleitungen und Abschirmungen.

### Ausführung der Erfindung

Der Lenkrad-Kranz ist ein Torus bzw. Ringkörper. Dessen kleinere Querschnitts-Kreise werden als Meridiane bezeichnet. Die innere, d.h. innen umlaufende Linie des Ringkörpers wird als innerer Äquator bezeichnet.

Die hier vorgeschlagenen Lösungen eines Sensors sind insbesondere dadurch gekennzeichnet, dass eine dreidimensional geformte Sensor-Matrix-Struktur die Lenkradkranz-Oberfläche weitestgehend bedeckt und deren Zuleitungen durch Zwischenräume bzw. Fugen in der Lenkrad-Oberfläche bzw. in der Sensor-Matrix-Struktur nach innen in Richtung des Lenkrad-Kranz-Inneren bzw. unter die Sensor-Oberfläche geführt werden. Diese Vielzahl von Zuleitungen kann dort unter oder in einer Abschirmung verlaufen.

In einer wichtigen aber nicht ausschließlichen Variante kann der Sensor in einem mehrschichtigen Aufbau hergestellt werden, in dem Sensor-Strukturen, Zuleitungs-Strukturen und Abschirmungs-Strukturen als wichtiger Verfahrensschritt zusammen entstehen. In diesem Aufbau können z.B. die Zuleitungen in einer Abschirmung oder unter einer Abschirmungs-Ebene des Aufbaus verlaufen. Der Aufbau kann hierzu oder in einem späteren Verfahrensschritt oder in mehreren Verfahrensschritten verformt werden, um sich der Lenkradkranz-Oberfläche an zu formen.

Die Sensor-Struktur ist erfindungsgemäß als kapazitiv wirksames Gitter von X-Linien und Y-Linien realisiert ▪ Diese Gitter bestehen aus sich in kleinem Abstand kreuzenden Leitern. Bevorzugt weisen sie innerhalb ihrer Ebene Flächen-Erweiterungen auf, um die kapazitive Wirkung zu erhöhen. Diese Erweiterungen sind insbesondere Rauten-Formen.

Wesentlich handelt es sich also um ein Sensor-Gerät, bestehend aus berührungs- oder näherungsempfindlichen Sensoren auf einem Lenkradkranz oder auf einem Lenkrad-Element, verknüpft mit einer elektronischen Steuereinheit, dadurch gekennzeichnet, dass es Berührungen oder Annäherungen durch Finger oder Hände erkennen kann, die feinauflösend in ihrer Flächen-Position auf der Lenkrad-Kranz- Oberfläche unterscheidbar sind, indem eine Sensor-Struktur in Form einer Vielzahl von Sensor-Elementen oder einer Matrix-Struktur auf der Lenkrad-Kranz-Oberfläche flächig ausgebreitet und dreidimensional geformt ist. Dabei werden deren Zuleitungen nach innen unter die Oberfläche und unter eine Abschirmung oder in einer Abschirmung geführt.

Feinauflösend heißt insbesondere, dass einzelne Finger unterscheidbar sind. Dazu ist erfindungsgemäß eine Mehr-Kanal-Sensor-Technologie nötig. Ein solcher Sensor besteht insbesondere aus Sensor-Strukturen, Zuleitungs-Strukturen und Abschirmungs-Strukturen. Die Sensor-Struktur als feinauflösender Mehr-Kanal-Sensor umhüllt den Lenkradkranz oder Abschnitte des Lenkradkranzes entlang seiner Meridiane weitgehend und ist dazu dreidimensional geformt.

Besagte Struktur besteht in Teilen optional aus piezo-elektrischen Sensoren, Sensoren zur Widerstandsmessung, sonstigen Druck-, Berührungs- oder Annäherungs-Sensoren.

Insbesondere besteht der Sensor aus kapazitiven X-Y-Matrix-Strukturen. Hier können in einer wichtigen Ausführungsform die leitenden Linien flächige Verbreiterungen aufweisen, z.B. als rautenförmige Strukturen. Die aufgebrachte Sensor-Struktur kann so vor-verformt sein, dass sie nach der Dehnung bzw. Montage geometrisch gleichmäßig ist.

Als flächige Verbreiterung der Linien kann auch leitendes Gewebe dienen, das aus Flach-Bändern aufgebaut ist, wie z.B. Kupfer- oder Karbon-Gewebe. Es kann als Oberfläche genutzt werden und müsste für den Einsatz als Sensor mit Isolationen versehen werden, um die jeweiligen Stränge gegeneinander zu isolieren. Ein jeweiliges Flach-Band kann z.B. mit seinen Fasern erst zu einem Kontakt-Anschluss verbunden werden, dann mit Isolation überzogen werden und dann zum Gewebe geflochten werden.

Die Zuleitungen können nach innen unter die - insbesondere röhrenförmige - Sensor-Oberfläche geführt werden, indem sie gefaltet oder gebogen oder über Kontakte weggeführt werden. Insbesondere kann das mittels 180°-Faltung oder Biegung des mehrschichtigen Aufbaus oder mittels Kontakten, Verschweißungen oder Durchkontakten geschehen.

Insbesondere können sie in eine dreidimensional geformte bzw. röhrenförmige Ebene unter die eigentliche Sensor-Ebene geführt werden, die wiederum durch eine dreidimensional geformte bzw. röhrenförmige Abschirm-Ebene gegenüber dem eigentlichen Sensor geschützt liegt.

Diese Prinzipien - z.B. Faltung, Biegung oder Kontakt - können entsprechend auch genutzt werden, um an einem Meridian die ankommenden Zuleitungen nach innen und in Richtung Prozessor-Tail zu führen.

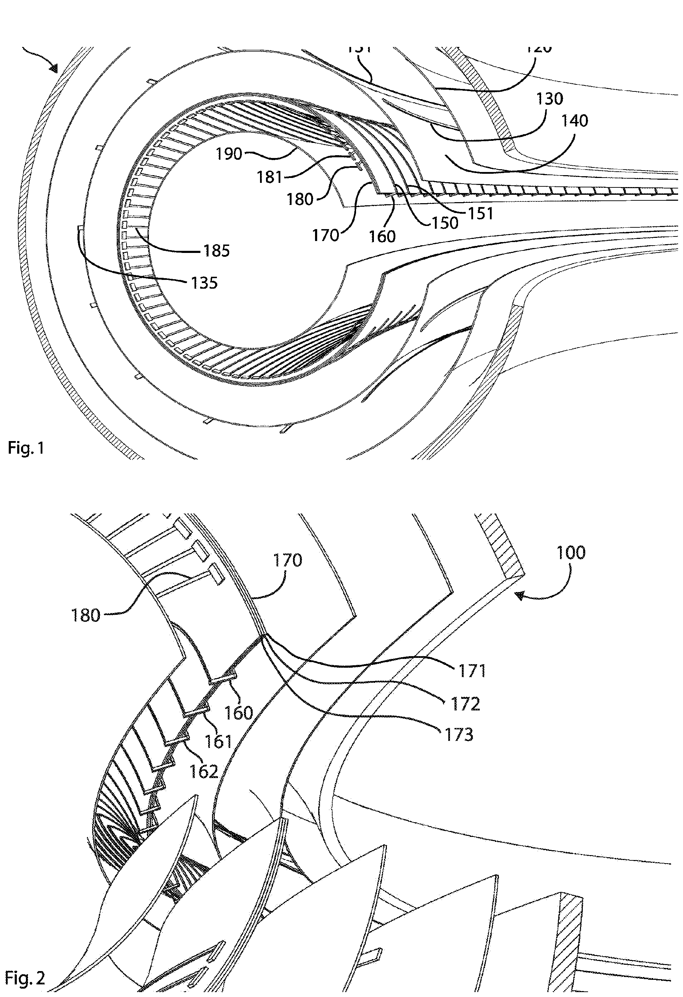

Fig. 1 zeigt eine beispielhafte Ausführungsform eines Sensors im Lenkrad-Kranz bzw. im Lenkrad-Element 100 im Querschnitt, bestehend aus Sensor-Matrix, Zuleitungen und Abschirmungen. Der Ringkörper ist in der Darstellung entlang einer äquatorialen Fuge geöffnet und radial auseinander gezogen, im Sinne einer Explosionszeichnung. Die umhüllende Sensor-Matrix ist am Äquator durch einen Zwischenraum unterbrochen, dort sind in dieser Ausführungsform Zuleitungen der X-Linien nach innen in Richtung des Lenkrad-Kranz-Inneren geführt.

Optional ist der Sensor mit einer Hülle 110 und einer Schutzschicht 120 umzogen. Es folgt eine Trägerschicht 140 für die oberen leitenden Strukturen, hier exemplarisch Y-Linien wie 130, 131 und 135. Das dreidimensionale Umhüllen des Ringkörpers erfolgt insbesondere mit diesen Y-Linien und X-Linien wie 150 und 151. Diese werden jeweils nach innen geführt mit Kontaktstücken wie 160 und sind mit Zuleitungen wie 180, 181 und 185 verbunden.

In dieser Variante sind die Trägerschichten als Explosionszeichnung separat von den Leitern dargestellt, es können aber auch Leiter innerhalb der zugehörigen Trägerschicht liegen, z.B. bei Gewebe. Hier ist die Trägerschicht für die X-Linien wie etwa 150 und 151 zusammen mit einer dazwischen liegenden Abschirmungsebene und der unten folgenden Trägerschicht für innen geführte Zuleitungen als dreischichtiger Aufbau 170 dargestellt. Abschließend kann innen z.B. eine Abschirmungs-Ebene 190 folgen.

Fig. 2 zeigt die Ausführungsform wie Fig. 1 vergrößert. Sichtbar ist der innere dreischichtige Aufbau 170 mit drei Ebenen: Die Trägerschicht 171 für Sensor-Strukturen, die flächige oder gitterähnliche Abschirmungs-Ebene 172 und die Trägerschicht 173 für Zuleitungen wie 180. Die Kontaktstücke wie 160, 161, 162 können in Varianten ausgeführt sein: Als Biegung oder Faltung des Trägermaterials 171 und 173 einschließlich Leiter um insbesondere 180° oder als Durchkontakte zwischen zwei Schichten oder als Leitungsstück. Z.B. ist der Kontakt 160 verbunden mit der Zuleitung 180 auf der Trägerschicht 173.

Die Zuleitungen zu den Sensor-Strukturen können in ihrem Verlauf so geführt werden, dass die Strecke dieser jeweiligen Zuleitungen etwa gleich ist und die Distanzen zu jeweils benachbarten Zuleitungen etwa gleich sind, um die kapazitiv wirksamen Eigenschaften der Leitungen etwa ähnlich zu halten. Aufgrund der relativ langen Wege entlang des Lenkrads kann diese Kompensation z.B. die Arbeit eines Kapazitäts-Daten auswertenden Prozessors erleichtern und verbessern.

Diese Strecken-Kompensation kann insbesondere erfüllt werden, indem eine Ebene mit Leiter-Strukturen bestimmte Wege der einzelnen Leiter aufweist:

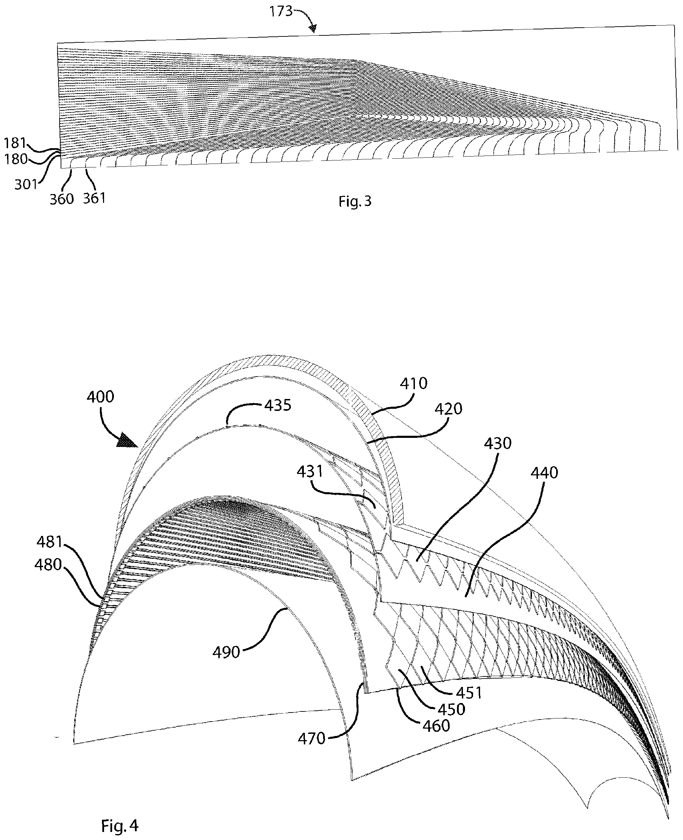

Fig. 3 zeigt eine solche beispielhafte Ausführungsform einer wichtigen Variante der hier abgewickelt dargestellten inneren Zuleitungs-Schicht 173, entsprechend zur in Fig. 2 verformten Schicht. Durch den Verlauf der Leitungen mit bestimmten Kurven erzielt das einerseits für alle Verbindungen eine ungefähr gleichlange Strecke und andererseits etwa gleiche Distanzen zu benachbarten Leitungen: Anschlüsse wie 360, 361 entsprechen in Fig. 2 den Kontaktstücken wie 160, 161 und werden innerhalb dieser Schicht 173 durch eine spezielle Struktur mit den weiterleitenden Anschlüssen wie 180, 181 verbunden. Die Leiter überqueren das - schließlich aber insbesondere röhren-ähnlich verformte - Rechteck: Der Leiter des entferntesten Eingangs sollte möglichst ohne Umwege etwa wie eine Diagonale verlaufen. Der Leiter für den nahesten Eingang verläuft in die Nähe der Rechteck-Mitte und dann zurück zum Ausgang. Die dazwischen liegenden Leiter haben entsprechend Umkehr-Kurven insbesondere in der Zone zwischen Rechteck-Mitte und entferntestem Eingang. Hier ist zusätzlich ein Blindleiter 301 als hin und zurück laufende Schleife dargestellt, der für den innen liegenden Leiter 180 als kapazitive Parallele wirkt. - Die Leiter können auch - in etwas veränderten Verläufen - wiederum eine Kompensation gegenüber verschiedenen Leiterlängen an anderer Stelle, wie im Pfad zur Lenkradspeiche, leisten.

Diese Zuleitungs-Schicht 173 kann in anderen Varianten auch zusammen mit einer Abschirmungs-Schicht in sich gerollt oder einmal oder mehrfach gefaltet werden, um sie z.B. in einem Hohlraum zu führen. - Man kann in einer solchen Schicht auch für die einzelnen Leiter jeweilige Abschirmungen z.B. durch zusätzliche gedruckte Leiter erzeugen, so dass quasi viele Koaxial-Kabel entstehen.

Eine Abschirmungs-Struktur z.B. 172 unter den Sensor-Strukturen kann zugleich als elektrische Heizung dienen, indem sie durch einen engmaschig hin und her verlaufenden Leiter als Gitter-Struktur erzeugt wird und z.B. mit Gleichstrom betrieben wird. - Falls nötig, kann nach innen bzw. nach unten hin eine weitere Abschirmungs-Ebene 190 installiert sein, um gegebenenfalls die kapazitiven Wirkungen durch das innere Metall-Skelett des Lenkrads auszuschließen.

Generell kann eine Sensor-Struktur zugleich als Heizung dienen, wenn man die Vielzahl einzelner Leiter z.B. durch jeweils getrennte Stromquellen versorgt, die Gleichstrom oder eine deutlich niedrigere Frequenz als die Sensor-Spannungen liefern. Man kann die einzelnen Leiter zum durchgängigen Heiz-Leiter machen, indem sie über induktive Frequenzsperren verbunden werden.

Sensor-Strukturen oder Zuleitungen oder Abschirmungen oder deren Kombinationen können aus Träger-Material mit zweiseitig aufgebrachten leitenden Strukturen bestehen. Ein Substrat z.B. aus Kunststoff-Schalen, Film, Folie oder Textil oder Gewebe, das beidseitig mit z.B. Y-Linien und X-Linien bedruckt oder bedampft oder eingewoben ist, hält beide Strukturen in ihrer Position zueinander, auch bei dann folgenden Verformungs-Schritten.

Zur Herstellung eines besagten Sensor-Gerätes können generell Sensor-Strukturen oder Zuleitungen oder Abschirmungen zusammen mit einem Trägermaterial verformt werden oder in einem Trägermaterial eingelegt oder eingewebt oder eingegossen oder eingeschäumt werden oder diese Verfahren kombiniert werden. Sensor-Strukturen oder Abschirmungen oder Zuleitungen können zusammen mit Trägermaterialien durch eine Abfolge von Verformungsschritten hergestellt werden.

Fig. 4 zeigt einen auseinander gezogenen beispielhaften Ebenen-Aufbau mit Matrix-Flächen-Erweiterungen im noch nicht vollständig verformten Zustand für ein Lenkrad-Element 400: Obere Sensor-Linien wie 430, 431, 435 auf Trägermaterial 440, untere Sensor-Linien wie 450, 451 und eine innere Zuleitungs-Ebene mit Leitungen wie 480, 481. Der dreischichtige Aufbau 470 enthält oben und unten je eine Trägermaterial-Ebene und dazwischen eine Abschirmungs-Ebene. Er wird im später verbleibenden Zwischenraum der Sensor-Fläche umgangen durch gebogene oder gefaltete Leitungen oder Kontakt-Stücke wie 460, welche die Linien der Sensor-Ebene wie 450, 451 mit ihren Zuleitungen wie 480, 481 verbinden. Zudem kann es eine innere Abschirmung 490 und eine Abdeckung 420 und z.B. eine Lederhülle 410 geben.

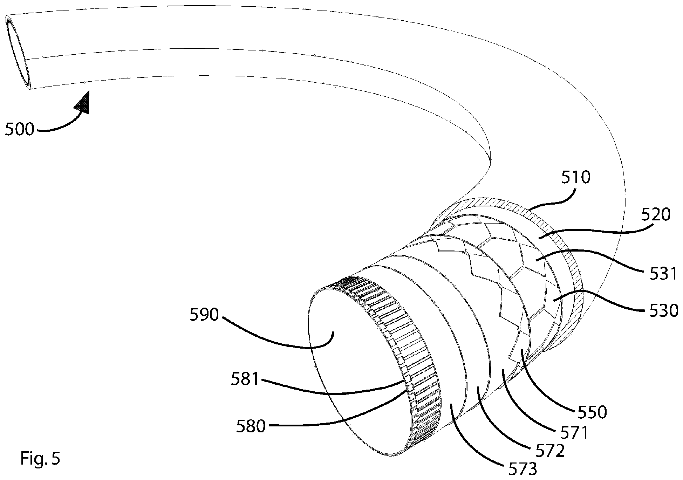

Fig. 5 zeigt schichtweise freigelegte Ebenen für ein Lenkrad 500 als exemplarische Ausführungsform einer Sensor-Matrix mit Flächen-Erweiterungen: Obere Sensor-Linien wie 530, 531, untere Sensor-Linien wie 550, eine innere Zuleitungs-Ebene mit Leitungen wie 580, 581 und Abschirmungs-Ebene 572 und Trägermaterial 571 und 573. Zudem kann es eine innere Abschirmung 590 und eine Abdeckung 520 und z.B. eine Lederhülle 510 geben. Der röhren-ähnliche Sensor wird gegenüber den eigenen röhren-ähnlichen Zuleitungen abgeschirmt.

Als wichtiges Verfahren zur Herstellung wird also idealerweise ein Sensor als mehrschichtiger Aufbau erstellt, an der späteren Äquatorlinie gebogen oder gefaltet, dann seitlich in Richtung eines Kreisquerschnitts gebogen, also in Richtung eines Rohrs oder Rohr-Elements gekrümmt und dann zum Ringkörper oder gekrümmten Ring-Element verformt oder z.B. durch Montage am Lenkrad in diese Form gebracht. Es können z.B. auch entsprechende Schalenformen oder Teil-Schalen erstellt und montiert werden. Ein mehrschichtiger dreidimensional vor-verformten Aufbau kann in eine Form gebracht wird, die etwas elastisch bleibt, so dass man es montieren kann, z.B. aus 2 Röhren in Halbkreis-Form mit Schnitt am Innen-Äquator oder 4 Halb-Röhren in Halbkreis-Form oder 8 Viertelkreis-Halb-Röhren.

Als Verfahren zur Herstellung des besagten feinauflösenden flächigen Sensors wird als wichtige, aber nicht ausschließliche Ausführungsform insbesondere vorgeschlagen, dass Sensor-Strukturen und Abschirmungen und Zuleitungen zusammen mit einem Trägermaterial verformt werden:

So kann z.B. ein im ersten Schritt zweiseitig mit Leiter-Strukturen wie einer Vielzahl von Sensor-Elementen oder einer Matrix-Struktur oder mit Zuleitungen oder mit Abschirmungen versehener Träger wie Kunststoff-Schale, Film, Folie, Textil oder Gewebe, dann in einem zweiten Schritt gebogen oder gefaltet werden, um die Zuleitungen nach innen zu führen. Insbesondere können die Zuleitungen unter die untere Sensor-Ebene gefaltet werden, wobei zwischen diesen beiden Ebenen eine Abschirmungs-Ebene platziert ist. Diese Platzierung kann z.B. auch durch den Faltungsvorgang geschehen. Der zweiseitig mit Leitern versehene Träger kann beide Sensor-Ebenen in präziser Position zueinander halten und zugleich weiteres integrieren: Wenn insbesondere - anders als in Fig. 1 , 2 , 4 und 5 dargestellt - die Sensor-Ebene mit der höheren Linienanzahl, mit als Meridianen laufenden Linien, nach oben verlegt wird und zusammen mit ihren Zuleitungen, z.B. wie in Fig. 3, in zunächst derselben Ebene hergestellt wird und die Sensor-Ebene mit kleinerer Linienanzahl, also mit den parallel zum Lenkradkranz laufenden Linien, als rückseitige Ebene zusammen mit einer - seitlich davon platzierten - Abschirmungs-Struktur hergestellt wird, führt dann deren Faltung oder Biegung entlang der späteren Innen-Äquator-Linie zum richtigen Aufbau: Obere Sensor-Struktur, untere Sensor-Struktur, Abschirmungs-Struktur, Zuleitungen der oberen Sensor-Struktur. Diese Abschirmungs-Struktur kann optional z.B. als engmaschiges Gitter aus hin und her laufenden Leitern ausgeführt sein und damit sogleich als Lenkradheizung dienen. - Kontaktstücke wie 460 würden in dieser Variante von der Zuleitungsebene etwas höher führen auf die oberen Meridian-Sensor-Linien.

In einem dritten Schritt kann dieser mehrschichtige Aufbau dreidimensional geformt werden. Insbesondere durch Nutzung verformbarer leitfähiger Tinten für den ersten Schritt ist das möglich. Diese Verformung kann grundsätzlich in Teil-Verformungsschritte untergliedert sein, etwa in eine Biegung des Aufbaus zur Halbröhre und dessen Krümmung zum Ringkörper. Das führt schließlich auf z.B. Halb- oder Viertel-Kreis-Segmente von Schalen, die in einem weiteren Schritt auf das kreisrunde Lenkrad aufzubringen sind. Bei der Verwendung von z.B. Film oder Folien oder ähnlichen plastisch verformbaren Trägem sollte die hergestellte Form eine gewisse Öffnung entlang des Äquators aufweisen, um elastisch montiert zu werden und um das elastische Schließen am Lenkrad zu erleichtern. Hier kann der spätere Kreisquerschnitt des Ringkörpers z.B. etwa um einen 75°-Winkel geöffnet bleiben, der bei der Montage am Lenkrad erst elastisch weiter aufgebogen wird, um aufgesetzt zu werden, und dann elastisch geschlossen wird.

Derartige Halb- oder Viertel-Kreis-Segmente von Schalen können dann von den Lenkradspeichen her elektronisch angeschlossen werden.

Das Herstellungsverfahren kann in einer anderen, nicht ausschließlichen Variante als Verfahrensschritt das Einbringen von Leitern in das Material-Volumen eines geschäumten Lenkrad-Rohlings enthalten. So können die unterste Ebene oder darauf folgende mehrere Ebenen des gesamten Aufbaus in einzelnen Schritten erzeugt werden. Insbesondere Abschirmungen oder Zuleitungen in unteren Ebenen oder die untere Sensor-Struktur können in den geschäumten Lenkrad-Rohling z.B. durch Drahteinlegen eingebracht werden. Also eine oder mehrere Ebenen der Sensor-, Zuleitungs- und Abschirmungs-Strukturen können durch in ein Material-Volumen wie z.B. Kunststoff-Schaum eingebrachte Leiter hergestellt werden.

Es ist sinnvoll, nach dem Aufschneiden des Material-Körpers und Einlegen eines Drahtes - z.B. durch Roboter - im selben Arbeitsgang das Material-Volumen sogleich wieder zu verschließen, z.B. durch Zusammenschweißen, Erhitzen, Zusammenpressen oder Kleben. Es kann dann in einer höheren Ebene eine weitere Leiter-Struktur eingebracht werden. Es sind damit mehrere aufeinander folgende solcher Schritte in verschiedenen Ebenen möglich.

Es können in weiterer Variante vorfabrizierte Leiter-Strukturen für Sensoren, insbesondere für Zuleitungen oder Abschirmungen bereits vor den oben genannten Schritten in den Lenkrad-Rohling eingegossen oder eingeschäumt werden.

Zudem gibt es Varianten, in denen die hier genannten Verfahren kombiniert werden. Eine wichtige Verfahrens- bzw. Geräte-Variante wird weiter unten als Hybrid-Lösung beschrieben.

Eine Kombination ist z.B. die Variante mit folgenden Schritten: Zunächst werden die unteren leitenden Strukturen eingeschäumt, dann die mittleren leitenden Strukturen in den Material-Rohkörper eingebracht und dann die oberen leitenden Strukturen aufgebracht, die zusammen mit ihrem Trägermaterial verformt sind. Die oberen Strukturen sind insbesondere Y-Linien, in einer anderen Variante Y- und X-Linien als Sensor-Strukturen oder in einerweiteren Variante diese zusammen mit der direkt darunter befindlichen Abschirmung.

Solche Hybrid-Varianten kombinieren Trägermaterial mit aufgedruckten oder aufgebrachten Leiter-Strukturen und Trägermaterial mit eingebrachten, eingewebten, eingeschäumten oder eingegossenen Leiter-Strukturen.

Folgender Hybrid ist eine wichtige, aber nicht ausschließliche Ausführungsform:
Die oberen Sensor-Strukturen sind auf die Unterseite eines Trägermaterials, insbesondere einer Schale, Folie oder eines Textils oder Gewebes aufgebracht - in einer anderen Variante dort eingewebt - und die unteren Sensor-Strukturen sind in einem Trägermaterial wie z.B. Schaum des Lenkrad-Rohlings eingelegt oder eingeschäumt. Es werden also zur Herstellung des Sensor-Gerätes verschiedene Technologien kombiniert. Durch diesen Hybrid-Aufbau liegen die oberen Sensor-Linien recht präzise auf dem Lenkrad-Rohling auf und es bleibt trotz mechanischer Belastungen des Lenkradkranzes eine genügend präzise Distanz zwischen beiden Sensor-Ebenen erhalten.

Im Unterschied zu der Variante wie in Fig. 1 dargestellt, ist es in dieser Hybrid-Variante sinnvoll, die Sensor-Linien mit kleinerer Anzahl, die längs des Kranzes verlaufen, unten anzuordnen: Sie können damit beispielsweise als Draht ohne häufiges Absetzen im Material-Ringkörper verlegt werden. Dann ist es sinnvoll, die Sensor-Linien mit hoher Anzahl, die quer zum Kranz, also in Meridianen verlaufen, mit verformbarem Trägermaterial herzustellen. Das bietet Vorteile: Es können z.B. die Zuleitungen der hier oberen Linien sogleich als Folie, Film, Textil oder Gewebe zusammen mit diesen oberen Linien hergestellt werden, die Vielzahl von Leitern ist hier kein Problem, und durch Zwischenräume bzw. durch eine Fuge in der Sensor-Oberfläche nach innen geführt werden. Dort können sie gerollt, gefaltet oder mehrfach gefaltet z.B. in einem kanal-ähnlichem Hohlraum entlang des Kranzes geführt werden.

In einer wichtigen, aber nicht ausschließlichen Variante kann das formbare Trägermaterial in seinem Zuleitungs-Teil auf der Gegen-Seite mit einer Abschirmung versehen sein, z.B. durch flächige oder engmaschige, gitterförmige aufgedruckte Leiter oder eingewebte Leiter. Das formbare Trägermaterial weist hier also auf einer Seite die Zuleitungen auf und auf der anderen Seite Abschirmungen. Damit können die Zuleitungen gerollt oder gefaltet werden, um sie in dem Hohlraum unter zu bringen und sind zugleich zwischen einer internen Abschirmung geführt.

Zugleich kann dieser Teil der Zuleitungen in oder auf dem Trägermaterial so gestaltet sein, dass die kapazitiven Wirkungen durch die jeweiligen Leitungslängen und Distanzen zueinander für die jeweiligen Leiter etwa gleich bleiben, siehe Fig. 3.

Es kann sinnvoll sein, in diesem dargestellten Aufbau eine röhrenringähnliche Abschirmung unterhalb der unteren Sensor-Linien einzubauen, und zwar durch in einem vorherigen Schritt in das Ringkörper-Material eingebrachte Leiter. Eine solche Abschirmung kann z.B. durch verlegte oder eingeschäumte oder eingegossene Leiter erzeugt werden.

Zuleitungen können in einem Hohlraum verlegt sein. Das kann z.B. ein kanalähnlicher Hohlraum längs des Lenkradkranzes sein, der unter einer Abschirmung verläuft, die im Material eingebracht oder eingegossen oder eingeschäumt ist. Zuleitungen und Abschirmungen sind gemeinsam gerollt, gefaltet oder mehrfach gefaltet. Zwischen den Zuleitungen können zudem jeweils abschirmende neutrale Leiter verlaufen. - Eine Zuleitungs-Struktur wie z.B. in Fig. 3 kann in einer Variante zusammen mit ein oder zwei entsprechenden Abschirmungs-Ebenen in Richtung der kurzen Seite gerollt oder gefaltet werden, um sie in einem Hohlraum-Kanal längs des Lenkrad-Kranzes zu führen.

Die vorgeschlagenen dreidimensionalen Aufbauten können grundsätzlich auch für Sensoren mit Widerstands-Messung, piezo-elektrischer Messung oder anderem genutzt werden.

Generell: Die offenbarten Lösungen umhüllen die Oberfläche des Ringkörpers mit einer weitgehend durchgängigen feinauflösenden Sensor-Struktur. Vorgeschlagen wird also eine zusammenhängende, möglichst durchgehende Sensor-Struktur, die nicht nur aus einzelnen Segmenten besteht, sondern die Oberfläche weitestgehend und gleichmäßig erfasst. Bestenfalls sind Touch-Events einzelner Finger erfassbar, auch reales Multi-Point-Multi-Touch mit vielen Kontaktpunkten, so dass Finger- und Hand-Kontaktflächen unterscheidbar sind.

Insbesondere heißt das eine durchgängige Qualität im Erfassen eines Kontakts auch im Übergang zu anderen Bereichen des Lenkrads, wie von vorne nach hinten, von oben nach unten usw.. D.h. es wird eine Gleichrangigkeit möglichst aller Oberflächenbereiche favorisiert, möglichst ohne dass gewisse Kanten oder physische Grenzen der Sensoren in Erscheinung treten.

In der Herstellung des Sensors entstandene Trennfugen, die auch etwa durch die Entscheidung für Teil-Schalen entstehen, können kompensiert werden: Es können Post-Processing bzw. Software die räumliche Zuordnung von Sensor-Bereichen ergänzen, z.B. das Aufeinanderfolgen von Punkten entlang eines Meridians. Und es kann eine z.B. durch Fugen halbierte Sensor-Linie mit beiden Teilen elektrisch gleichgeschaltet werden und damit die Fuge wirkungslos machen. So ist ein nahezu übergangsloses Erkennen von Berührungen oder Annäherungen möglich.

Im wesentlichen sind das Sensoren mit Mehrfach-Kanal-Signalen, insbesondere durch Matrix-Strukturen mit sich kreuzenden Linien. Diese können insbesondere als X-Y-Strukturen oder z.B. auch mit Flächen-Vergrößerungen wie Quadrat-Muster genutzt werden und leisten eine hohe Auflösung. Es ist grundsätzlich eine schemenhafte Erkennung von Finger- und Hand-Partien möglich. Die dreidimensionalen Verformungen der Sensoren und Zuleitungen können durch Algorithmen bzw. Selbst-Kalibrierung neuer Prozessoren ausgeglichen werden.

Es können insbesondere für Sensoren mit flächenverbreiterten Linien Auswertungs-Prozesse genutzt werden, die Phänomene der selbst-erzeugten Kapazität und auch Phänomene der gegenseitig-erzeugten Kapazität und verschiedene, schnell wechselnde Frequenzen nutzen. Hier sind echte Multi-Point Multi-Touch-Auswertungen möglich und Auswertungen der Annäherung von Fingern im Luftraum über der Oberfläche.

Ein feinauflösender Mehr-Kanal-Sensor kann in weiterer Ausführungsform erzeugt werden, indem Leiter-Strukturen in Gruppen von jeweils verschiedenen Verlaufsrichtungen eine Sensor-Matrix erzeugen, insbesondere indem zwei Leiter-Gruppen schiefwinklig, zueinander gegenläufig, dreidimensional umlaufen. Z.B. unter der Lenkrad-Kranz-Oberfläche laufende zwei Gruppen von gegenläufig schiefwinklig verlaufenden Leitern erzeugen eine Sensor-Matrix, indem sie in zwei verschiedenen Tiefen verlaufen und eine Vielzahl gemeinsamer Kreuzungspunkte bilden. Eine Gruppe bestehend z.B. aus 20 Leitern geht z.B. von einem Meridian aus, läuft schiefwinklig über den Ringkörper und kreuzt sich mit der anderen Gruppe von z.B. 20 schiefwinklig laufenden Leitern, indem sie in anderer Richtung um den Kranz herum läuft. Diese schiefwinklige Richtung entspricht z.B. für einen erschlossenen Viertelkreis des Lenkrads der, die auf seiner abgewickelten Lenkrad-Kranz-Oberfläche als Diagonale entsteht, z.B. einem Winkel von etwa 20°. Z.B. für jeden Viertelkreis des Lenkrads kann ein Sensor durch zwei Lenkrad-Speichen angeschlossen werden.

So kann eine Leiter-Gruppe den Kranz weitgehend umhüllen, zusammen mit der zweiten Leiter-Gruppe entsteht eine flächige Sensor-Matrix, die in Draufsicht z.B. rautenförmige Muster ergibt. Beide Leiter-Gruppen in entgegengesetzter Richtung schiefwinklig um den Ringkörper umlaufend bilden eine Matrix. Z.B. an einem Meridian können diese Leiter umgelenkt werden und zur Lenkradspeiche laufen.

Im Vergleich zu der Variante in Fig. 1 kann die Gruppe der oberen Linien wie 130, 131 z.B. jeweils um 20° nach links abgelenkt auf der Fläche 140 verlaufen. Die Linien dieser Gruppe laufen also in dieser Sicht nach links drehend um den Ringkörper. Die Gruppe der unteren Linien wie 150, 151 kann, anstatt wie hier vom rechts liegenden Innen-Äquator des Ringkörpers auszugehen, vom hier im Bild geschnittenen Meridian ausgehen: Ebenfalls wie die erste Gruppe beginnen die Linien der zweiten Gruppe an dem Meridian und laufen aber entgegen drehend, also z.B. 20° nach rechts abgelenkt über die Ebenen 170. Es entsteht in diesem Beispiel durch beide Linien-Gruppen eine Rauten ähnliche Matrix mit Schnittwinkeln von etwa 40°.

Speziell an dieser Variante ist eine unterschiedliche Auflösung des Sensors in den beiden Richtungen seiner Oberfläche. Vorteil dieser Variante ist, dass man nicht eine Vielzahl von Kontakten wie 160 und keine langen internen Zuleitungen wie 180, 181 benötigt. Die Zuleitungen bleiben hier am Meridian. Dort können sie z.B. in Analogie zum Äquator der Fig.1 an der Kante des hier im Bild geschnittenen Meridians umgelenkt werden: Die am Meridian ankommenden Leiter können insbesondere nach innen umgelenkt und/oder stark verengt werden und zur Speiche laufen.

Im Sinne von Anspruch 3 kann auch diese schiefwinklige Linien-Matrix Flächenverbreiterungen haben, die z.B. auf einem Trägermaterial aufgebracht werden, also ein gedehntes Rautenmuster ergeben.

Diese schiefwinklige Variante ist grundsätzlich als Film, Folie, Textil oder Gewebe herstellbar, z.B. im Sinne eines bedruckten Folien-Rohres odereines gestrickten Rohres. Umlaufende Linien müssen hier gegebenenfalls an einer Trennfuge durch Kontakte angeschlossen und weitergeführt werden. Eine adäquate, robuste Herstellungsweise sind schiefwinklig gegenläufig umlaufend eingelegte Draht-Gruppen.

Linien oder Zuleitungen, die zu einem Ringkörper-Meridian als Anschluss-Meridian laufen, können dort z.B. in Analogie zur Umlenkung der Leiter am Innen-Äquator der Fig.1 und Fig.2 an der Kante des dort im Bild geschnittenen Meridians umgelenkt werden: Am Meridian ankommende Leiter wie 130, 131 oder auch die inneren wie 180, 181, 185 können insbesondere nach unten bzw. nach innen umgelenkt werden, z.B. damit unter die Sensor-Struktur gebogen oder gefaltet werden und/oder stark verengt werden, ringförmig entlang des Meridians weiter führen und schließlich insbesondere durch eine Fuge am Innen-Äquator des Ringkörpers zur Speiche in Richtung Prozessor laufen. Damit wird nur ein minimaler Zwischenraum in der eigentlichen Sensor-Oberfläche benötigt: Eine Fuge am Meridian und eine kleinere Fuge am Äquator. Die inneren Leiter wie 180, 181, 185 können auch bereits auf dem Träger 173 in Richtung des Meridians umgelenkt und enger geführt werden.

Entsprechendes gilt für die am Anschluss-Meridian ankommenden Leiter wie 130, 131 oder in Fig. 4 die Leiter wie 430, 431 und 435: Um diese Leiter heraus zu führen, kann eine Umlenkung bereits als Kurve auf dem Trägermaterial 171 oder 440 insbesondere um etwa 90° in Richtung des Meridian-Kreisrings stattfinden, also dann ringförmig entlang des Meridians weiter führen. Oder es kann das Trägermaterial mit den Leitern durch eine Faltung um 45° seine Richtung wechseln. Oder es können Kontakte zu anderen Leitern hergestellt werden, die dann entlang des Meridians laufen.

Idealer weise werden dazu die besagten Zuleitungen in Relation zur Sensor-Oberfläche nach innen in Richtung des Lenkrad-Kranz-Inneren geführt, indem sie schon vor dem Verformungsschritt zum Ringkörper bzw. vor der Montage des ganzen Sensors nach unten geführt werden. Das geschieht insbesondere, indem sie unter die unteren Schichten des Sensor-Aufbaus gefaltet werden, insbesondere durch eine Faltung um 180° an der Kante, die dann letztlich dem Meridian-Kreisring entspricht. Das erleichtert eine Herstellung aus Folie, Film, Textil, Gewebe oder ähnlichem. Andernfalls sind hierz.B. Durchkontakte sinnvoll.

Eine leichte Zunahme der Dicke des gesamten Aufbaus am Anschluss-Meridian kann insbesondere durch eine entsprechende leichte Aussparung im Lenkrad-Rohling ausgeglichen werden. - Oder das Trägermaterial mit den Zuleitungen wird z.B. eingerollt oder mehrfach gefaltet in einem Hohlraum des Lenkrad-Rohlings, der z.B. ringförmig entlang eines Meridians verläuft.

All das betrifft entsprechend auch die Zuleitungen in Fig. 4 und Fig. 5 wie 480, 481 oder 580, 581 und die ankommenden Leiter wie 530, 531, entsprechend auf dem Trägermaterial 470 oder 573. Hier können gegebenenfalls noch jeweils Abschirmungsebenen zwischen gelegt werden.

## Patentansprüche

1. Sensor-Gerät bestehend aus berührungs- oder näherungsempfindlichen Sensoren in einem Lenkradkranz oder in einem Lenkrad-Element, verknüpft mit einer elektronischen Steuereinheit, wobei
es Berührungen oder Annäherungen durch Finger oder Hände erkennen kann, die in ihrer jeweiligen Position auf oder über der Oberfläche unterscheidbar sind, indem eine Sensor-Struktur auf der Oberfläche flächig ausgebreitet und dreidimensional geformt ist, **dadurch gekennzeichnet, dass** besagte Sensor-Struktur aus einem Gitter (130, 131, 135, 150, 151) mit X-Linien und Y-Linien besteht und diese X-Linien und Y-Linien als sich in kleinem Abstand kreuzende elektrische Leiter, als kapazitiv wirksames Gitter, realisiert werden, wobei die Sensor-Struktur als feinauflösender Mehr-Kanal-Sensor ausgebildet ist, so dass einzelne Finger unterscheidbar sind,
um Multi-Point-Multi-Touch-Messungen zu ermöglichen.

2. Sensor-Gerät nach Anspruch 1, **dadurch gekennzeichnet, dass** die leitenden Linien flächige Verbreiterungen aufweisen.

3. Sensor-Gerät nach Anspruch 1, **dadurch gekennzeichnet, dass** die Sensor-Struktur den Lenkradkranz oder Abschnitte des Lenkradkranzes entlang seiner Meridiane weitgehend umhüllt.

4. Sensor-Gerät nach Anspruch 1, **dadurch gekennzeichnet, dass** Zuleitungen zu der Sensor-Struktur durch Zwischenräume in der Sensor-Fläche nach innen geführt sind.

5. Sensor-Gerät nach Anspruch 1, **dadurch gekennzeichnet, dass** Zuleitungen zu der Sensor-Struktur unter eine Abschirmung oder in einer Abschirmung geführt sind.

6. Sensor-Gerät nach Anspruch 1, **dadurch gekennzeichnet, dass** Zuleitungen gefaltet oder gebogen oder über Kontakte weggeführt werden.

7. Sensor-Gerät nach Anspruch 1, **dadurch gekennzeichnet, dass** Zuleitungen zu den Sensor-Strukturen in ihrem Verlauf so geführt werden, dass die Längen dieser Zuleitungen etwa gleich sind und die Distanzen zu jeweils benachbarten Zuleitungen etwa gleich sind.

8. Sensor-Gerät nach Anspruch 1, **dadurch gekennzeichnet, dass** eine leitende Struktur zugleich als elektrische Heizung genutzt wird.

9. Sensor-Gerät nach Anspruch 1, **dadurch gekennzeichnet, dass** die Sensor-Struktur oder Zuleitungen oder Abschirmungen oder deren Kombinationen aus Träger-Material mit zweiseitig aufgebrachten leitenden Strukturen bestehen.

10. Sensor-Gerät nach Anspruch 1, **dadurch gekennzeichnet, dass** die Sensor-Struktur oder Zuleitungen oder Abschirmungen in einem Trägermaterial eingelegte, eingewebte, eingegossene oder eingeschäumte Strukturen sind.

11. Sensor-Gerät nach Anspruch 1, **dadurch gekennzeichnet, dass** unterschiedliche Konstellationen aus Trägermaterial und Leiter-Struktur kombiniert werden, insbesondere Trägermaterial mit aufgedruckten oder aufgebrachten Leiter-Strukturen und Trägermaterial mit eingebrachten, eingewebten, eingeschäumten oder eingegossenen Leiter-Strukturen kombiniert wird.

12. Sensor-Gerät nach Anspruch 1, **dadurch gekennzeichnet, dass** Zuleitungen zur Sensor-Struktur in einem Hohlraum verlegt sind.

13. Verfahren zur Herstellung eines Sensor-Gerätes bestehend aus berührungs- oder näherungsempfindlichen Sensoren auf einem Lenkradkranz oder auf einem Lenkrad-Element, **dadurch gekennzeichnet, dass** das Sensorgerät Berührungen oder Annäherungen durch Finger oder Hände erkennen kann, die in ihrer Position auf der Oberfläche unterscheidbar sind, indem eine Sensor-Struktur, die aus einem Gitter (130, 131, 135, 150, 151) mit X-Linien und Y-Linien besteht und diese X-Linien und Y-Linien als sich in kleinem Abstand kreuzende elektrische Leiter, als kapazitiv wirksames Gitter, realisiert werden, flächig ausgebreitet und dreidimensional geformt ist und indem Sensor-Strukturen oder Zuleitungs-Strukturen oder Abschirmungs-Strukturen zusammen mit einem Trägermaterial verformt werden oder in einem Trägermaterial eingelegt oder eingewebt oder eingegossen oder eingeschäumt werden oder diese Verfahren kombiniert werden.

14. Verfahren zur Herstellung eines Sensor-Gerätes nach Anspruch 13, **dadurch gekennzeichnet, dass** eine oder mehrere Ebenen der Sensor-, Zuleitungs- und Abschirmungs-Strukturen durch Einbringen von Leitern in ein Material-Volumen hergestellt werden.

15. Verfahren zur Herstellung eines Sensor-Gerätes nach Anspruch 13, **dadurch gekennzeichnet, dass** Sensor-Strukturen oder Abschirmungen oder Zuleitungen durch eine Abfolge von Verformungsschritten hergestellt werden.

## Claims

1. Sensor device comprising touch-sensitive or proximity-sensitive sensors in a steering wheel rim or in a steering wheel element, linked to an electronic control unit, wherein it can detect touches or approaches by fingers or hands that are distinguishable in their respective position on or above the surface, in that a sensor structure is spread in a planar manner on the surface and formed three-dimensionally, **characterized in that** said sensor structure consists of a grid (130, 131, 135, 150, 151) having X-lines and Y-lines and said X-lines and Y-lines are realized as electrical conductors crossing at a small distance from one another, as a capacitively active grid, wherein the sensor structure is configured as a high-resolution multi-channel sensor such that individual fingers are distinguishable, in order to enable multi-point multi-touch measurements.

2. Sensor device according to claim 1, **characterized in that** the conducting lines have planar widenings.

3. Sensor device according to claim 1, **characterized in that** the sensor structure substantially encases the steering wheel rim or sections of the steering wheel rim along its meridians.

4. Sensor device according to claim 1, **characterized in that** feed lines to the sensor structure are routed inward through gaps in the sensor surface.

5. Sensor device according to claim 1, **characterized in that** feed lines to the sensor structure are routed under a shielding or within a shielding.

6. Sensor device according to claim 1, **characterized in that** feed lines are folded or bent or routed away via contacts.

7. Sensor device according to claim 1, **characterized in that** feed lines to the sensor structures are routed in their course such that the lengths of said feed lines are approximately equal and the distances to respectively adjacent feed lines are approximately equal.

8. Sensor device according to claim 1, **characterized in that** a conducting structure is simultaneously used as an electrical heater.

9. Sensor device according to claim 1, **characterized in that** the sensor structure or feed lines or shieldings or combinations thereof consist of carrier material with conducting structures applied on both sides.

10. Sensor device according to claim 1, **characterized in that** the sensor structure or feed lines or shieldings are structures embedded, woven, cast, or foamed into a carrier material.

11. Sensor device according to claim 1, **characterized in that** different combinations of carrier material and conductor structure are combined, in particular carrier material with printed or applied conductor structures and carrier material with introduced, woven, foamed, or cast conductor structures are combined.

12. Sensor device according to claim 1, **characterized in that** feed lines to the sensor structure are laid in a cavity.

13. Method for manufacturing a sensor device comprising touch-sensitive or proximity-sensitive sensors on a steering wheel rim or on a steering wheel element, **characterized in that** the sensor device can detect touches or approaches by fingers or hands that are distinguishable in their position on the surface, **in that** a sensor structure, which consists of a grid (130, 131, 135, 150, 151) having X-lines and Y-lines and said X-lines and Y-lines are realized as electrical conductors crossing at a small distance from one another, as a capacitively active grid, is spread in a planar manner and formed three-dimensionally, and **in that** sensor structures or feed-line structures or shielding structures are deformed together with a carrier material or are embedded or woven or cast or foamed into a carrier material, or these methods are combined.

14. Method for manufacturing a sensor device according to claim 13, **characterized in that** one or more layers of the sensor, feed-line, and shielding structures are manufactured by introducing conductors into a material volume.

15. Method for manufacturing a sensor device according to claim 13, **characterized in that** sensor structures or shieldings or feed lines are manufactured by a sequence of deformation steps.

## Revendications

1. Appareil à capteurs constitué de capteurs sensibles au toucher ou à l'approche dans une couronne de volant de direction ou dans un élément de volant de direction, lié à une unité de commande électronique, dans lequel il peut reconnaître des touchers ou des approches par des doigts ou des mains qui peuvent être distingués en ce qui concerne leurs positions respectives sur la surface ou au-dessus de celle-ci par le fait qu'une structure de capteur est étalée en surface sur la surface et est formée en trois dimensions,
**caractérisé en ce que** ladite structure de capteur est constituée d'une grille (130, 131, 135, 150, 151) comportant des lignes X et des lignes Y et lesdites lignes X et lignes Y sont réalisées sous forme de conducteurs électriques se croisant à faible distance, sous forme de grille à effet capacitif, dans lequel la structure de capteur est réalisée sous forme de capteur multicanal à haute résolution, de sorte que des doigts individuels peuvent être distingués pour permettre des mesures multipoint/multitouche.

2. Appareil à capteurs selon la revendication 1, **caractérisé en ce que** les lignes conductrices présentent des élargissements de surface.

3. Appareil à capteurs selon la revendication 1, **caractérisé en ce que** la structure de capteur enveloppe largement la couronne de volant de direction ou des parties de la couronne de volant de direction le long de ses méridiens.

4. Appareil à capteurs selon la revendication 1, **caractérisé en ce que** des lignes d'alimentation vers la structure de capteur sont guidées vers l'intérieur à travers des espaces intermédiaires dans la surface de capteur.

5. Appareil à capteurs selon la revendication 1, **caractérisé en ce que** des lignes d'alimentation vers la structure de capteur sont guidées sous un blindage ou dans un blindage.

6. Appareil à capteurs selon la revendication 1, **caractérisé en ce que** des lignes d'alimentation sont pliées ou courbées ou écartées par l'intermédiaire de contacts.

7. Appareil à capteurs selon la revendication 1, **caractérisé en ce que** des lignes d'alimentation vers les structures de capteurs sont guidées dans leur tracé de telle sorte que les longueurs desdites lignes d'alimentation sont approximativement égales et que les distances vers des lignes d'alimentation respectivement voisines sont approximativement égales.

8. Appareil à capteurs selon la revendication 1, **caractérisé en ce qu'**une structure conductrice est utilisée en même temps comme moyen de chauffage électrique.

9. Appareil à capteurs selon la revendication 1, **caractérisé en ce que** la structure de capteur ou les lignes d'alimentation ou les blindages ou leurs combinaisons sont constitués d'un matériau de support comportant des structures conductrices appliquées des deux côtés.

10. Appareil à capteurs selon la revendication 1, **caractérisé en ce que** la structure de capteur ou les lignes d'alimentation ou les blindages sont des structures insérées, tissées, coulées ou moussées dans un matériau de support.

11. Appareil à capteurs selon la revendication 1, **caractérisé en ce que** différentes constellations de matériau de support et de structure de conducteur sont combinées, en particulier un matériau de support comportant des structures de conducteurs imprimées ou appliquées et un matériau de support comportant des structures de conducteurs intégrées, tissées, moussées ou coulées.

12. Appareil à capteurs selon la revendication 1, **caractérisé en ce que** des lignes d'alimentation vers la structure de capteur sont posées dans un espace creux.

13. Procédé pour la fabrication d'un appareil à capteurs constitué de capteurs sensibles au toucher ou à l'approche sur une couronne de volant de direction ou sur un élément de volant de direction, **caractérisé en ce que** l'appareil à capteurs peut reconnaître des touchers ou des approches par des doigts ou des mains qui peuvent être distingués en ce qui concerne leurs positions sur la surface par le fait qu'une structure de capteur, laquelle est constituée d'une grille (130, 131, 135, 150, 151) comportant des lignes X et des lignes Y et lesdites lignes X et lignes Y sont réalisées sous forme de conducteurs électriques se croisant à faible distance, sous forme de grille à effet capacitif, est étalée en surface et formée en trois dimensions, et par le fait que des structures de capteurs ou des structures de lignes d'alimentation ou des structures de blindages sont déformées conjointement avec un matériau de support ou insérées ou tissées ou coulées ou moussées dans un matériau de support, ou lesdits procédés sont combinés.

14. Procédé pour la fabrication d'un appareil à capteurs selon la revendication 13, **caractérisé en ce qu'**un ou plusieurs niveaux des structures de capteurs, de lignes d'alimentation et de blindages sont fabriqués en introduisant des conducteurs dans un volume de matériau.

15. Procédé pour la fabrication d'un appareil à capteurs selon la revendication 13, **caractérisé en ce que** des structures de capteurs ou des blindages ou des lignes d'alimentation sont fabriqués par une succession d'étapes de déformation.
